# EUROPÄISCHE PATENTSCHRIFT

(11) **EP 1 983 365 B1**
(45) Veröffentlichungstag und Bekanntmachung des Hinweises auf die Patenterteilung: **11.07.2012**
(21) Anmeldenummer: 08003258.4
(22) Anmeldetag: 22.02.2008
(51) Int. Cl.: G02F 1/01

(54) **Datenträger mit Display**
Data carrier with display
Support de données avec affichage

(30) Priorität: 20.04.2007 DE 102007018770
(43) Veröffentlichungstag der Anmeldung: 22.10.2008
(73) Patentinhaber: Giesecke & Devrient GmbH, 81677 München (DE)
(72) Erfinder: Graf, Hans, 83026 Rosenheim (DE); Kluge, Stefan, 80997 München (DE)

(56) Entgegenhaltungen:
- WO-A-2004/053786
- JP-A- 5 185 792
- JP-A- 2000 335 149
- US-A- 4 922 242
- US-A1- 2002 097 777

## Beschreibung

Die Erfindung betrifft einen Datenträger mit einem elektronischen Display, insbesondere eine Chipkarte.

Ein Datenträger im Sinn der Erfindung ist ein Rechnersystem, bei dem die Ressourcen, d.h. Speicherressourcen und/ oder Rechenkapazität (Rechenleistung) begrenzt sind, z.B. eine flache Chipkarte (Smart Card, Mikroprozessor-Chipkarte) oder ein flacher Token. Der Datenträger hat einen genormten (z.B. ISO 7810, z.B. ID-1, ID-00, ID-000) oder nicht genormten Körper, in dem ein Chip mit einer CPU (einem Mikroprozessor) und in der Regel ein oder mehrere Speicher angeordnet sind. Der Datenträger kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben.

Zunehmend werden Datenträger mit einem elektronischen Display versehen. Das elektronische Display wird über einen Displaytreiber angesteuert, der das Display unter Anderem mit Energie versorgt. Der Displaytreiber kann in den gleichen Chip wie der Mikroprozessor integriert sein oder separat von diesem Chip vorgesehen sein.

Für Displays in Chipkarten werden derzeit bevorzugt permanente Displays verwendet, deren Anzeigeinhalt über einen langen Zeitraum von Monaten oder sogar Jahren erhalten bleibt, ohne dass dem Display Energie zugeführt zu werden braucht. Permanente Displays haben den Vorteil, dass ihnen Energie nur dann zugeführt werden muss, wenn der Anzeigeinhalt geändert werden soll. Deshalb sind sie sehr energiesparend. Unter den permanenten Displays sind insbesondere beispielsweise bistabile elektrophoretische Displays (auch electronic ink Displays oder Displays auf Basis von elektrischer Tinte genannt) bevorzugt, da sie einen sehr geringen Energieverbrauch haben.

Mitunter kann es unerwünscht sein, dass der Anzeigeinhalt einer Displaykarte permanent erhalten bleibt, beispielsweise bei einer Chipkarte mit der Funktion einer elektronischen Geldbörse, weil sonst jederzeit und für jedermann sichtbar ist, welches Guthaben in der Geldbörse abgespeichert ist.

Nach dem Stand der Technik muss dem Display Energie zugeführt werden, um den Anzeigeinhalt vom Display zu löschen. Der Energiebedarf zum Löschen des Displays ist ähnlich hoch wie der zum Erzeugen eines Anzeigeinhalts auf dem Display. Gerade bei Chipkarten mit eigener Energieversorgung (z.B. Batterie) ist die verfügbare Energiemenge sehr begrenzt. Der Nutzer der Chipkarte muss daher stets abwägen, ob er einen einmal erzeugten Anzeigeinhalt auf dem Display belässt oder wieder löscht. Aus Sicherheitsgründen sollte er das Display löschen. Allerdings kostet dies Energie. Zudem muss der Anzeigeinhalt erneut auf dem Display erzeugt werden, wenn der Nutzer den Anzeigeinhalt (z.B. Guthaben der Geldbörse) vergessen hat.

Im Banknotenbereich ist es bekannt, thermochrome Schichten zu verwenden, um Merkmale zu erzeugen, deren Farbe sich bei Berührung oder durch Rubbeln ändert.

Aus der WO 2004/053786 A1 ist ein Datenträger mit einem permanenten Display (d.h. einem sog. Electronic Inc Display oder Display auf Basis von elektronischer Tinte) bekannt. Bei diesem Display kann der Anzeigeinhalt ohne Energiezufuhr an das Display dauerhaft angezeigt bleiben. In einer speziellen Variante kommt dabei ein Temperatur-sensitives Display zum Einsatz, bei dem der Anzeigeinhalt des Displays solange unsichtbar bleibt, bis dieses auf eine vorgegebene Temperatur erwärmt ist.

Aus der JP 5185792 A ist ein Display bekannt, welches als Wandtafel oder White Board in einer staubfreien Umgebung eingesetzt werden kann. Das Display weist hierzu eine photoleitende Schicht zwischen zwei ansteuerbaren Elektroden auf, wobei eine der ansteuerbaren Elektroden transparent ist. Auf der transparenten Elektrode ist eine thermochrome Schicht aufgebracht. Wird mit einem thermischen Stift auf dem Display geschrieben, so wird der Verlauf der Schrift auf der thermochromen Schicht sichtbar gemacht. Hierdurch kann Licht im Bereich der Schrift durch die transparente Elektrode hindurch auf die photoleitende Schicht treffen. Im Bereich der Schrift wird zwischen den beiden ansteuerbaren Elektroden ein Strom erzeugt, welcher wiederum für eine Wärmeerzeugung sorgt. Aufgrund des thermischen Feedback-Effekts kann der Verlauf der Schrift dauerhaft sichtbar gemacht werden.

In der US 4,922,242 ist eine Anzeigevorrichtung für Straßeninformationen, Werbung oder Tankstelleninformationen beschrieben. Die Anzeigevorrichtung umfasst ein Widerstandselement, das zwischen einer ersten und einer Mehrzahl an zweiten Elektroden angeordnet ist. Abhängig von der selektiven Ansteuerung einer oder mehrerer der zweiten Elektroden werden Bereiche einer auf der Anordnung aufgebrachten thermochromen Schicht aktiviert, welche aufgrund der in dem Widerstandselement umgesetzten Wärme eine sichtbare Änderung seiner Farbgebung vornimmt.

Der Erfindung liegt die Aufgabe zu Grunde, einen Datenträger mit einem sicheren und zugleich energiesparenden Display zu schaffen.

Die Aufgabe wird gelöst durch einen Datenträger nach Anspruch 1. Vorteilhafte Ausgestaltungen der Erfindung sind in den abhängigen Ansprüchen angegeben.

Das elektronische Display des erfindungsgemäßen Datenträgers nach Anspruch 1 zeichnet sich dadurch aus, dass das Display zumindest teilweise mit einer Deckschicht aus einem thermochromen Material bedeckt ist, das in einem Grundzustand opak ist und in Reaktion auf geeignete Wärmezufuhr vorübergehend transparent oder transluzent wird.

Durch die opake Deckschicht ist ein auf dem Display angezeigter Anzeigeinhalt ohne weiteres Zutun verdeckt und somit nicht sichtbar, insbesondere für Unbefugte unsichtbar. Erst unter Wärmezufuhr, die ein Nutzer des Displays willentlich steuern kann, wird die Deckschicht transparent (farblos) oder transluzent (durchscheinend, und dabei optional farbig), und der Anzeigeinhalt des Displays wird sichtbar, ohne dass dem Display Energie zugeführt zu werden braucht. Da die Deckschicht lediglich vorübergehend transparent oder transluzent wird, braucht das Display auch nicht gelöscht zu werden, sondern der Anzeigeinhalt wird von selbst unsichtbar, wenn die Deckschicht wieder opak wird. Eine erneute Energiezufuhr ist erst wieder erforderlich, wenn sich der anzuzeigende Anzeigeinhalt geändert hat, z.B. weil ein zu Grunde liegender Speicherinhalt, der als Anzeigeinhalt auf dem Display angezeigt werden kann, geändert worden ist (z.B. Guthaben einer elektronischen Geldbörse).

Daher ist gemäß Anspruch 1 ein Datenträger mit einem sicheren und zugleich energiesparenden Display geschaffen.

Die Deckschicht bedeckt das Display mindestens teilweise, vorzugsweise zumindest in demjenigen Bereich, in welchem ein Anzeigeinhalt anzeigbar ist. Wahlweise ist die Deckschicht gleich groß wie das Display, d.h. deckungsgleich mit dem Display. Falls das Display in einen Gegenstand, z.B. einen Datenträger, eingebaut ist, überlappt wahlweise die thermochrome Schicht das Display ein wenig, ist also etwas größer als das Display.

Wahlweise ist das Display durch die Zufuhr menschlicher Körperwärme vorübergehend transparent oder transluzent steuerbar, insbesondere durch Auflegen eines Fingers auf die Deckschicht oder Reiben bzw. Rubbeln der Deckschicht.

Die Zeitspanne, während welcher die Deckschicht vorübergehend transparent oder transluzent wird, ist vorzugsweise lang genug eingestellt, dass sie genügt, damit ein Nutzer das Display bequem ablesen kann, und kurz genug, um Unbefugte am Ablesen des Displays zu hindern. Wahlweise wird die Deckschicht für eine Zeitspanne von mindestens einer Sekunde und höchstens zehn Sekunden vorübergehend transparent oder transluzent.

Die Zeitspanne wird beispielsweise durch eine geeignete Auswahl des thermochromen Materials und/ oder eine geeignete Gestaltung der Schicht, insbesondere Schichtdicke, eingestellt.

Wahlweise ist das Display ein permanentes Display, insbesondere bistabiles elektrophoretisches Display (electronic ink Display oder Display auf Basis von elektrischer Tinte). Bei permanenten Displays ist die Erfindung besonders vorteilhaft. Denn bei einem permanenten Display mit der erfindungsgemäßen Deckschicht kann ein Anzeigeinhalt des Displays ohne Energiezufuhr an das Display dauerhaft angezeigt bleiben, und zugleich ist der Anzeigeinhalt durch die Deckschicht vor unbefugtem Ablesen geschützt.

Wahlweise ist der Datenträger als Chipkarte gestaltet.

Ein Anzeigeinhalt des Displays kann durch eine Steuerinformation vorgegeben sein, die beispielsweise von einer Anwendung auf der Chipkarte stammt.

Wahlweise hat der Datenträger die Funktion einer elektronischen Geldbörse. Der Anzeigeinhalt des Displays ist ein Wert, der in einer elektronischen Geldbörse gespeichert ist.

Wahlweise hat der Datenträger die Funktion eines Generators für Einmalpasswörter (OTP). Der Anzeigeinhalt des Displays ist ein erzeugtes Einmalpasswort.

Wahlweise hat der Datenträger die Funktion einer Bonusanwendung. Der Anzeigeinhalt des Displays sind die Bonuspunkte einer Bonusanwendung.

Wahlweise hat der Datenträger die Funktion einer Glücksspielkarte. Der Anzeigeinhalt des Displays sind Glücksspiel-, Los- und/ oder Gewinninformationen.

Wahlweise hat der Datenträger die Funktion einer Ticketanwendung, beispielsweise für den öffentlichen Nah- oder Fernverkehr. Der Anzeigeinhalt des Displays sind Ticketinformationen, wie beispielsweise die verbleibende Streifenzahl einer Streifenkarte, der Status eines Tickets, Sitzplatz- oder Reservierungsinformationen.

Wahlweise hat der Datenträger weiter eine Energiequelle, z.B. Batterie, Akkumulator, Solarzelle, oder piezo- oder pyroelektrische Energiequelle.

Wahlweise hat der Datenträger weiter eine Schalteinrichtung zum Anzeigen und/oder Löschen eines Anzeigeinhalts auf dem Display. Die Schalteinrichtung hat beispielsweise einen oder mehrere Tastschalter, oder eine Tastatur mit mehreren Tasten, wahlweise einen einzelnen Tastschalter. Durch Betätigen eines Tastschalters (auf Knopfdruck) wird ein Anzeigeinhalt auf dem Display angezeigt, z.B. indem ein Speicherinhalt auf dem Display angezeigt wird, bzw. vom Display gelöscht.

Im Folgenden wird die Erfindung an Hand von Ausführungsbeispielen und unter Bezugnahme auf die Zeichnung näher erläutert, in der zeigt:

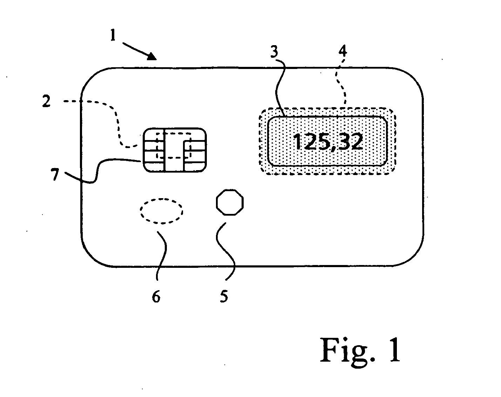

Fig. 1 eine Chipkarte mit einem Display mit Deckschicht, gemäß einer Ausführungsform der Erfindung.

Fig. 1 zeigt eine Chipkarte 1 mit einem Display 3 mit einer Deckschicht 4 aus einem thermochromen Material, gemäß einer Ausführungsform der Erfindung. Die Deckschicht 4 ist etwas größer als das Display 3 und überlappt das Display 3 somit ein wenig. Die Chipkarte hat weiter einen Chip 2, in welchem beispielsweise eine elektronische Geldbörse implementiert ist, Kontaktflächen 7 für die kontaktbehaftete Kontaktierung des Chips 2, einen Tastschalter 5, mit dem sich ein im Chip 2 abgespeicherter Guthabenstand der elektronischen Geldbörse auf Knopfdruck zur Anzeige auf dem Display 3 bringen lässt, sowie eine Batterie 6, mit welcher das Display 3 auf Knopfdruck des Tastschalters 5 mit Energie versorgt wird. Die Deckschicht 4 ist im Grundzustand opak. Bei Berührung mit einem Finger wird die Deckschicht 4 transparent und gibt die Sicht auf das Display 3 frei. Innerhalb von fünf Sekunden, nachdem der Finger vom Display 3 entfernt worden ist, kühlt die Deckschicht 4 allmählich wieder ab - in der Regel vom Rand her - und wird zunehmend undurchsichtiger, bis sie schließlich wieder völlig opak ist.

## Patentansprüche

1. Datenträger (1) mit einem elektronischen Display (3), **dadurch gekennzeichnet, dass** das Display (3) zumindest teilweise mit einer Deckschicht (4) aus einem thermochromen Material bedeckt ist, das in einem Grundzustand opak ist und in Reaktion auf Wärmezufuhr vorübergehend transparent oder transluzent wird.

2. Datenträger (1) nach Anspruch 1, wobei das Display (3) durch die Zufuhr menschlicher Körperwärme vorübergehend transparent oder transluzent steuerbar ist.

3. Datenträger (1) nach Anspruch 1 oder 2, wobei die Deckschicht (4) für eine Zeitspanne von mindestens einer Sekunde und höchstens zehn Sekunden vorübergehend transparent oder transluzent wird.

4. Datenträger (1) nach einem der Ansprüche 1 bis 3, wobei als Display (3) ein permanentes Display vorgesehen ist, insbesondere ein bistabiles elektrophoretisches Display.

5. Datenträger (1) nach einem der Ansprüche 1 bis 4, wobei das Display eingerichtet ist, einen Anzeigeinhalt abhängig von einer Steuerinformation anzuzeigen.

6. Datenträger (1) nach einem der Ansprüche 1 bis 5, wobei die Deckschicht so ausgebildet ist, dass nach erfolgter Wärmezufuhr ein Anzeigeinhalt des Displays temporär sichtbar wird.

7. Datenträger (1) nach einem der Ansprüche 1 bis 6, der als Chipkarte gestaltet ist.

8. Datenträger (1) nach einem der Ansprüche 1 bis 7, der die Funktion einer elektronischen Geldbörse hat.

9. Datenträger (1) nach einem der Ansprüche 1 bis 8, der weiter eine Energiequelle (6) aufweist.

10. Datenträger nach einem der Ansprüche 1 bis 9, der weiter eine Schalteinrichtung (5) zum Erzeugen und/oder Löschen eines Anzeigeinhalts auf dem Display (3) aufweist.

## Claims

1. A data carrier (1) with an electronic display (3), **characterized in that** the display (3) is covered at least partly with a cover layer (4) of a thermochromic material which is opaque in a basic state and, in reaction to heat supply, becomes temporarily transparent or translucent.

2. The data carrier (1) according to claim 1, whereby the display (3) is controllable temporarily transparent or translucent by supplying human body heat.

3. The data carrier (1) according to claim 1 or 2, whereby the cover layer (4) becomes temporarily transparent or translucent for a time period of at least one second and at most ten seconds.

4. The data carrier (1) according to any of the claims 1 to 3, whereby as display (3) a permanent display is provided, in particular a bistable eletrophoretic display.

5. The data carrier (1) according to any of the claims 1 to 4, whereby the display is adapted to display a display content in dependence on a control information item.

6. The data carrier (1) according to any of the claims 1 to 5, whereby the cover layer is configured so that after heat supply has taken place, a display content of the display becomes temporarily visible.

7. The data carrier (1) according to any of the claims 1 to 6, which is designed as a chip card.

8. The data carrier (1) according to any of the claims 1 to 7, which has the function of an electronic purse.

9. The data carrier (1) according to any of the claims 1 to 8, which further has an energy source (6).

10. The data carrier according to any of the claims 1 to 9, which further has a switching device (5) for producing and/ or deleting a display content on the display (3).

## Revendications

1. Support de données (1) comprenant une unité électronique d'affichage (3), **caractérisé en ce que** l'unité d'affichage (3) est au moins partiellement recouverte d'une couche de recouvrement (4) consistant en un matériau thermochromique qui est opaque dans un état de base et devient temporairement transparent ou translucide en réaction à un apport de chaleur.

2. Support de données (1) selon la revendication 1, l'unité d'affichage (3) pouvant, par l'apport de chaleur corporelle humaine, être commandée temporairement en transparence ou translucidité.

3. Support de données (1) selon la revendication 1 ou 2, la couche de recouvrement (4) devenant temporairement transparente ou translucide pour un laps de temps d'au minimum une seconde et d'au maximum dix secondes.

4. Support de données (1) selon une des revendications de 1 à 3, une unité d'affichage permanent, notamment une unité d'affichage électrophorétique bistable, étant prévue en tant qu'unité d'affichage (3)

5. Support de données (1) selon une des revendications de 1 à 4, l'unité d'affichage étant configurée pour afficher un contenu d'affichage en fonction d'une information de commande.

6. Support de données (1) selon une des revendications de 1 à 5, la couche de recouvrement étant réalisée de telle manière que, quand un apport de chaleur a eu lieu, un contenu d'affichage de l'unité d'affichage devient temporairement visible.

7. Support de données (1) selon une des revendications de 1 à 6 qui est conçu sous forme de carte à puce.

8. Support de données (1) selon une des revendications de 1 à 7 qui a la fonction d'un porte-monnaie électronique.

9. Support de données (1) selon une des revendications de 1 à 8 qui comporte en outre une source d'énergie (6).

10. Support de données selon une des revendications de 1 à 9 qui comporte en outre un dispositif de commutation (5) destiné à générer et/ou à effacer un contenu d'affichage sur l'unité d'affichage (3).
